(19) Europäisches Patentamt / European Patent Office / Office européen des brevets

(11) **EP 3 172 612 B1**

(12) **EUROPÄISCHE PATENTSCHRIFT**

(45) Veröffentlichungstag und Bekanntmachung des Hinweises auf die Patenterteilung:
**01.09.2021  Patentblatt 2021/35**

(21) Anmeldenummer: **15739227.5**

(22) Anmeldetag: **13.07.2015**

(51) Int Cl.:
*G02B 21/36* (2006.01)     *G02B 21/02* (2006.01)
*G06T 5/50* (2006.01)     *G06T 5/00* (2006.01)

(86) Internationale Anmeldenummer:
**PCT/EP2015/065945**

(87) Internationale Veröffentlichungsnummer:
**WO 2016/015984 (04.02.2016 Gazette 2016/05)**

(54) **VERFAHREN ZUR KORREKTUR VON AUFLICHTREFLEXEN IN EINEM MODULAREN DIGITALMIKROSKOP, DIGITALMIKROSKOP UND DATENVERARBEITUNGSPROGRAMM**

METHOD FOR CORRECTING FOR TOP ILLUMINATION REFLECTION IN A MODULAR DIGITAL MICROSCOPE, DIGITAL MICROSCOPE AND DATA PROCESSING PROGRAM

PROCÉDÉ DE CORRECTION DE RÉFLEXIONS LIÉES À L'ÉCLAIRAGE INCIDENT DANS UN MICROSCOPE NUMÉRIQUE MODULAIRE, MICROSCOPE NUMÉRIQUE ET PROGRAMME DE TRAITEMENT DE DONNÉES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.07.2014  DE 102014215095**

(43) Veröffentlichungstag der Anmeldung:
**31.05.2017  Patentblatt 2017/22**

(73) Patentinhaber: **Carl Zeiss Microscopy GmbH 07745 Jena (DE)**

(72) Erfinder:
• **MILDE, Thomas 07616 Nausnitz (DE)**

• **FUNCK, Max 14482 Potsdam (DE)**

(74) Vertreter: **Müller, Silke Carl Zeiss AG Patentabteilung Carl-Zeiss-Promenade 10 07745 Jena (DE)**

(56) Entgegenhaltungen:
**DE-A1- 10 114 757     US-A1- 2011 142 365**

• **None**

EP 3 172 612 B1

**Beschreibung**

Die Erfindung betrifft ein Verfahren zur Korrektur von durch koaxiales Auflicht verursachten Auflichtreflexen in einem modularen Digitalmikroskop, welches eine motorisierte Zoomeinrichtung und ein auswechselbares Objektiv umfasst. Weiterhin betrifft die Erfindung eine Digitalmikroskop und ein Datenverarbeitungsprogramm zur Ausführung des Verfahrens.

In der Digitalmikroskopie können beleuchtungsbedingte systematische Abbildungsfehler auftreten, welche insbesondere bei der Verwendung von Wechselobjektiven und motorisierten Zoomsystemen von Gerät zu Gerät und je nach aktueller Zoomeinstellung unterschiedlich stark ausgeprägt sind.

Solche beleuchtungsbedingten systematischen Abbildungsfehler können beispielsweise Reflexe bei einer koaxialen Auflichtbeleuchtung sein, die insbesondere bei Objektiven mit vergleichsweise großer Brennweite problematisch sind bzw. die Benutzung von koaxialem Auflicht unmöglich machen.

Da in der Mikroskopie die Beleuchtungsarten häufig miteinander kombiniert werden, können diese Abbildungsfehler durchaus auch in verschiedenen Ausprägungen kombiniert auftreten. Verschiedene Verfahren zur Bildkorrektur in optischen Systemen sind insbesondere aus der Digitalkameratechnik bekannt. Bei Foto Objektiven beispielsweise wird Vignettierung als Korrektionsmittel für Bildfehler (Koma) eingesetzt.

Es gibt weiterhin Ansätze zur digitalen Korrektur von Mehrfachreflexen in Fotoobjektiven. Um Artefakte bei der Bildaufnahme zu korrigieren ist das Verfahren des Dunkelbildabzuges gebräuchlich.

Aus der US 2002/0041383 A1 ist ein Bildaufnahmesystem aus dem Anwendungsbereich der "machine vision" bekannt. Bei diesem System sollen alle geometrischen Verzeichnungen von Kamera, Objektiv, Beleuchtung und Computersystem gemessen und digital korrigiert werden, um ein verzeichnungsfreies digitales Bild in der korrekten Vergrößerung zu berechnen. Dabei werden die Bilder korrigiert und alle auf dieselbe Vergrößerung skaliert. Es erfolgt eine simultane Korrektur verschiedener Abbildungsfehler. Mit einer speziellen geometrischen und/oder Beleuchtungs-Kalibrationsmaske erfolgt eine Systemkalibration, zu welcher zwei Kameras erforderlich sind. Das beschriebene Verfahren ist äußerst aufwendig.

Aus der DE 101 14 757 B4 ist eine Digitalkamera für ein Mikroskop bekannt, die Bildkorrekturen bei der Verwendung von Objektiven mit unterschiedlichen Brennweiten oder von Zoomobjektiven vornimmt. Die Korrekturen betreffen die Ungleichmäßigkeit einer Ausleuchtungsstärke, Helligkeit und/oder Farbe eines Hintergrundbildes bei verschiedenen Brennweiten oder Vergrößerungen. Als Bildkorrekturdaten werden fotografische Bilddaten eines Standardhintergrundbildes verwendet, das fotografiert wird, wenn kein zu beobachtendes Objekt vorhanden ist.

Die US 2011/0142365 A1 beschreibt ein Verfahren zur Shading-Korrektur bei mikroskopischen Aufnahmen.

Bei der Verwendung einer koaxialen Auflichtbeleuchtung beim Mikroskop wird mittels eines Strahlteilers Licht in den Beobachtungsstrahlengang eingekoppelt. Bevor das Licht auf das Objekt trifft, tritt es durch mindestens ein optisch wirksames Element der Beobachtungsoptik. An der Grenzfläche solch eines Elementes, insbesondere in der Nähe der optischen Achse werden gewisse Teile des Lichtes reflektiert und mischen sich mit dem Nutzlicht, welches vom Objekt durch die Beobachtungsoptik propagiert. Dieses reflektierte Licht bildet den so genannten Auflicht-Reflex.

In modularen Zoomsystemen können bei bestimmten Objektiven solche Auflicht-Reflexe auftreten, die sich in ihrer Form, Farbe und Intensität beim zoomen und auch beim Wechsel zu einem anderen Objektiv gleicher Bauart verändern.

Die Aufgabe der Erfindung besteht darin, ein Verfahren zur Korrektur von beleuchtungsbedingten Abbildungsfehlern, insbesondere zur Korrektur eines durch koaxiales Auflicht verursachten Auflicht-Reflexes, in einem modular aufgebauten Digitalmikroskop mit motorisiertem Zoomsystem und Wechselobjektiv, sowie ein Digitalmikroskop und ein Datenverarbeitungsprogramm zur Durchführung des Verfahrens bereitzustellen.

Die Lösung der Aufgabenstellung gelingt durch ein Verfahren mit den Merkmalen des Anspruchs 1, durch ein Digitalmikroskop mit den Merkmalen des Anspruch 9 und durch ein Datenverarbeitungsprogramm mit den Merkmalen des Anspruchs 10. Ein Digitalmikroskop, in dem das erfindungsgemäße Verfahren angewendet werden kann umfasst ein wechselbares Objektiv, ein motorisiertes Zoomsystem, eine koaxiale Auflicht-Beleuchtungsvorrichtung (auch als koaxiale Hellfeld-Beleuchtungseinrichtung bezeichnet), eine digitale Bilderfassungseinheit, eine Bildverarbeitungseinheit und eine Steuereinheit. In der Bildverarbeitungseinheit läuft das erfindungsgemäße Korrekturverfahren ab, indem es vorzugsweise in einen Controller (FPGA) implementiert ist.

Das erfindungsgemäße Verfahren beruht auf der Verwendung von Kalibrationsdaten, welche vorzugsweise in der Bildverarbeitungseinheit als Kalibrationsdatensatz hinterlegt sind.

Der Kalibrationsdatensatz wird für jede Kombination von Objektiv und Zoom ermittelt und in einem Datenspeicher abgelegt. Da die Objektive eine elektronische Schnittstelle aufweisen, kann die Steuereinheit das jeweils verwendete Objektiv erkennen und den passenden Kalibrationsdatensatz auswählen. Liegt für eine bestimmte Konfiguration noch kein Kalibrationsdatensatz vor, so führt die Steuereinheit einen Kalibrationsvorgang durch, welcher folgendermaßen abläuft:

Es wird das Auflicht auf einen bestimmten Wert der möglichen Bestromung (vorzugsweise 40%) eingestellt. Der digitale Steuer-Wert dazu wird abgespeichert. Es wird das optische Gerät so positioniert, dass keinerlei Objekte im Fokus der Abbildung liegen (maximale Defokussierung). Eine maximale Defokussierung kann auch erreicht werden, indem eine matte möglichst nicht reflektierend beschichtete Kalibrationskappe auf das Objektiv aufgesetzt wird. Auch ein Objektivschutzdeckel könnte bei entsprechend gestalteter Innenfläche als Kalibrationskappe verwendet werden.

Auf dem Sensor entsteht nun ein Bild des Auflicht-Reflexes. Möglicherweise kann es erforderlich sein, den Raum um das optische Gerät herum geeignet abzudunkeln.

Nun werden n spezifizierte Zoompositionen nacheinander angefahren, wobei der minimale und maximale Zoom als Zoompositionen jedenfalls eingeschlossen sein müssen. Das System bestimmt nun vorzugsweise automatisch Blende und Integrationszeit und es wird je Zoomposition ein Bild des jeweiligen Auflichtreflexes aufgenommen und anschließend gemeinsam mit der Integrationszeit und der Zoomstellung abgespeichert.

In einer besonders bevorzugten Ausführungsform des erfindungsgemäßen Verfahrens wird das Bild jeweils in eine geringe Auflösung skaliert, wie später noch anhand eines Ausführungsbeispiels erläutert wird. Dazu wird es vorzugsweise vorher Tiefpass gefiltert. Vorteilhafterweise können nun zum Einen die Kalibrationsbilder mit geringem Speicherbedarf abgespeichert werden, weiterhin ist dadurch das live-Korrekturverfahren schneller ausführbar.

Das erfindungsgemäße Korrekturverfahren kann vorteilhafterweise im Live-Bild-Modus angewendet werden und umfasst nachfolgend beschriebene Schritte.

Zunächst wird überprüft, ob für die vorliegende Kombination von Modulen (Zoom und Objektiv) ein Kalibrationsdatensatz in einem Speicher der Steuereinheit oder der Bildverarbeitungseinheit vorliegt. Falls nicht, wird die zuvor beschriebene Kalibration durchgeführt.

Für ein an der Bilderfassungseinheit eingezogenes Bild wird die aktuelle Zoomposition ermittelt.

Darüber hinaus werden der aktuelle Bestromungswert der Auflichtbeleuchtung und die aktuelle Integrationszeit der Bilderfassungseinheit ermittelt. Aus diesen Daten wird ein Korrekturfaktor berechnet, der den Kalibrationszustand und den aktuellen Zustand in Beziehung setzt.

Ein Reflexbild wird in Abhängigkeit des Zoomfaktors mittels aus den der Zoomposition benachbarten Kalibrationsbildern berechnet. Dies kann beispielsweise mit konvexer Linearkombination erfolgen.

Das Reflexbild wird nun mit dem Korrekturfaktor zur einem angepassten Reflexbild verrechnet, vorzugsweise durch Multiplikation.

Anschließend wird das angepasste Reflexbild vom aktuell erfassten Bild subtrahiert, und zwar an den Pixeln, die nicht übersteuert sind.

Anschließend erfolgt ein Multiplizieren des Differenzbildes mit einem Faktor, um die ursprüngliche Helligkeit wieder herzustellen bzw. dieser anzunähern.

Für den Fall, dass die Kalibrationsbilder in reduzierter Auflösung vorliegen, liefert eine bilineare Interpolation das zu benutzende Reflexbild an allen Pixeln in voller Auflösung für den gewichteten Bildabzug.

Einige vorteilhafte Aspekte und Ausführungsvarianten des erfindungsgemäßen Verfahrens werden nachfolgend anhand einer besonders bevorzugten Ausführungsform näher erläutert.

Das erfindungsgemäße Verfahren wird in dieser Ausführungsform in einem Digitalmikroskop verwendet, das eine optische Einheit mit einem Objektiv, einem motorischen Zoomsystem, einer Bilderfassungseinheit mit einem Bildsensor und einer Bildverarbeitungseinheit umfasst. Die optische Einheit umfasst eine koaxiale Hellfeld-Beleuchtungseinrichtung und ist in einem Stativ motorisch höhenverstellbar angeordnet. Das Digitalmikroskop umfasst weiterhin einen in einer horizontalen Ebene und vertikal verschiebbaren Objekttisch und eine Steuereinheit. Das Digitalmikroskop verfügt weiterhin über eine Benutzerschnittstelle, über die vorzugsweise ein PC verbunden wird.

Zunächst soll eine Variante zur Erzeugung eines Kalibrationsdatensatzes erläutert werden.

In der Steuereinheit ist eine Kalibrationsroutine hinterlegt, in der die Schritte des Kalibriervorganges implementiert sind. Zunächst wird überprüft, ob das Objektiv neu im Mikroskop ist. Dazu wird ein Speicher 'ROS', in dem die Seriennummern der letzten zehn verwendeten Objektive gespeichert sind auf Vorhandensein des aktuellen Objektives überprüft. Der Speicher kann beispielsweise eine SD-Card oder ein anderer Wechselspeicher oder auch ein fester Systemspeicher sein. Ist das Objektiv bereits bekannt, kann direkt in den Operationsmodus gewechselt werden, da in diesem Fall Kalibrationsdatensätze bereits vorliegen.

Es wird nun von der Steuereinheit eine Nachricht, wie z.B. "Bitte Warten - Kalibrierung Reflexkorrektur" an die Benutzerschnittstelle gesendet und vorzugsweise an einem Bildschirm dargestellt.

Der Antrieb der optischen Einheit des Mikroskops wird in die höchste, der Objekttisch in die niedrigste Position verfahren. Der Zoom wird auf einen minimalen Wert, der ggf. zwischen den Objektivtypen variieren kann, z.B. $\beta$=0,5 eingestellt. Eine eventuell vorhandene Dunkelfeldbeleuchtung wird ausgeschaltet. Die koaxiale Hellfeld-Beleuchtungseinrichtung wird mit einem definierten Bestromungswert (z. B. 40%) eingeschaltet.

Nun werden neun Kalibrationsbilder in verschiedenen Zoompositionen mit konstanter Beleuchtung aufgenommen. Die Zoompositionen umfassen in jedem Fall den kleinst- und größtmöglichen Zoomfaktor, wobei der kleineste Zoomfaktor vom Objektivtyp abhängen kann, und sollten mehr Stützstellen in dem Bereich des komplett sichtbaren Reflexes aufweisen. Dies ist meist in den kleineren Vergrößerungsstufen der Fall, während bei großem Zoomfaktor der Reflex eher als "Nebel-Aufhellung" erscheint. In der beschriebenen Ausführungsform sind als Zoompositionen 0.5, 0.565, 0.8, 1, 1.4, 1,9, 3, 5. Die Kalibrationsbilder werden mit ihrer jeweiligen Belichtungszeit als Metadatum gespeichert. Die Belichtungszeit wird im Kalibrationsmodus vorzugsweise automatisch ermittelt. Um die Belichtungszeit auch zwischen den Kalibrationsbelichtungszeiten zur Verfügung zu haben, wird der Verlauf der Belichtungszeiten über den Zoompositionen durch eine Belichtungsformel approximiert. Vorzugsweise ist dies ein Polynom vierten Grades. Damit diese Belichtungsformel an den Zoompositionen exakte Werte liefert, wird der Quotient aus angepasster und tatsächlicher Belichtungszeit ermittelt und die Kalibrationsbilder werden mit dem jeweiligen Quotienten multipliziert. Unter dem Paradigma, dass die Belichtungszeit proportional ist zur Helligkeit, was für HDR-Techniken üblicherweise auch vorausgesetzt wird, ergibt sich dadurch eine exakt interpolierende Formal für die Belichtungszeiten der Kalibrationsbilder.

Um einen besonders schnellen Live-Korrekturmodus zu ermöglichen, werden die Kalibrationsbilder in jedem ihrer Farbkanäle wie nachfolgend beschrieben bearbeitet.

- Anwenden eines Tiefpassfilters z. B. durch Anwendung eines gleitenden 2D-Mittelwertes mit 40x40 Pixeln
- Skalieren des Bildes in ein 19x27 Pixel großen Bildes des Reflexes für jeden Farbkanal Ausgehend vom Bildzentrum wird einschließlich des Bildzentrums in jede Richtung jedes sechzigste Pixel verwendet.
- Die neun skalierten Kalibrationsbilder, die Kalibrationsbeleuchtungsstärke L_CBF und fünf Koeffizienten für den Fit der Belichtungszeiten E_R über die neun Vergrößerungsstufen werden durch einem Polynom vierter Ordnung auf dem Speicher als Kalibrationsdatensatz abgelegt.

Anschließend erfolgt eine Meldung an die Benutzerschnittstelle "Kalibrierung fertig".

Im Mikroskopbetrieb kann die Option Live-Reflex-Korrektur ausgewählt werden. Bei Auswahl dieser Option werden bei jedem Bildeinzug die Belichtungszeit E_N, der Bestromungswert einer Hellfeld-Beleuchtung L_BF und eine aktuelle Zoomposition ermittelt. Diese Werte können direkt am Mikroskop bestimmt werden, da die Komponenten über elektronische Schnittstelen zur Steuereinheit verfügen.

Nun wird aus dem Kalibrationsdatensatz die konstante Kalibrationsbeleuchtungsstärke L_CBF ausgelesen und die korrekte Belichtungszeit E_R für die aktuelle Zoomposition ermittelt. Zur Ermittlung von E_R werden die fünf Koeffizienten des Kalibrationsdatensatzes ausgelesen und das Polynom für die aktuelle Vergrößerung β berechnet.

Ist die aktuelle Vergrößerung β keine im Kalibrationsprozess verwendete Vergrößerung, werden die zwei benachbarten Zoomstufen ermittelt und das skalierte Reflexbild durch eine lineare Interpolation der zugehörigen Kalibrationsbilder ima, imb ermittelt. Für den Fall, dass die aktuelle Vergrößerung β genau eine der Kalibrationszoomstufen trifft, wird das betreffende Kalibrationsbild als zu skalierendes Reflexbild verwendet.

Durch bilineare Interpolation wird das Kalibrationsbild auf die Originalgröße, z.B. 1200x1600 Pixel zurückgerechnet: Dies muss nicht für das gesamte Bild erfolgen, sondern kann für jedes Original-Bild-Pixel 'on-the-fly' erfolgen, da die bilineare Interpolation lokal (in der Bildverarbeitungseinheit) erfolgt.

Dieser Umstand kommt der Verarbeitung in einem FPGA (field programmable gate array) mit zeilenweiser Bearbeitung des Live-Pixel-Streams entgegen.

Das auflösungserhöhte Bild wird nun mit den aktuellen und Kalibrationsdaten nach folgender Formel, die den Korrekturfaktor darstellt, skaliert:

$$\frac{E\_N * L\_BF}{E\_R * L\_CBF} * 0{,}97$$

Dabei ist der Wert 0,97 ein beispielhafter Sicherheitsfaktor, der entsprechend der Erfordernisse anpassbar, aber nicht zwingend erforderlich ist.

Das so modifizierte Reflexbild wird vom Live-Bild an nicht übersteuerten Pixeln subtrahiert. Auch diese Subtraktion kann pixelweise oder zeilenweise erfolgen.

Anschließend wird der Dynamikumfang gestreckt, wofür verschiedene Stretching-Methoden verwendet werden können, die dem Fachmann bekannt sind.

Das zuvor beschrieben Verfahren ist vorteilhafterweise zur Live-Korrektur in die Hardware der Bildverarbeitungseinheit implementiert, eignet sich aber auch zur Anwendung in einer separaten Software zur Bildnachbearbeitung.

Anhand der Figuren wird nachfolgend die Wirkung des erfindungsgemäßen Korrekturverfahrens dargestellt.

Es zeigen:

Fig. 1:    ein Mikroskopbild unter koaxialer Hellfeld-Beleuchtung mit Reflex;

Fig. 2:    das Mikroskopbild gemäß Fig. 1 bei Verwendung des Korrekturverfahrens;

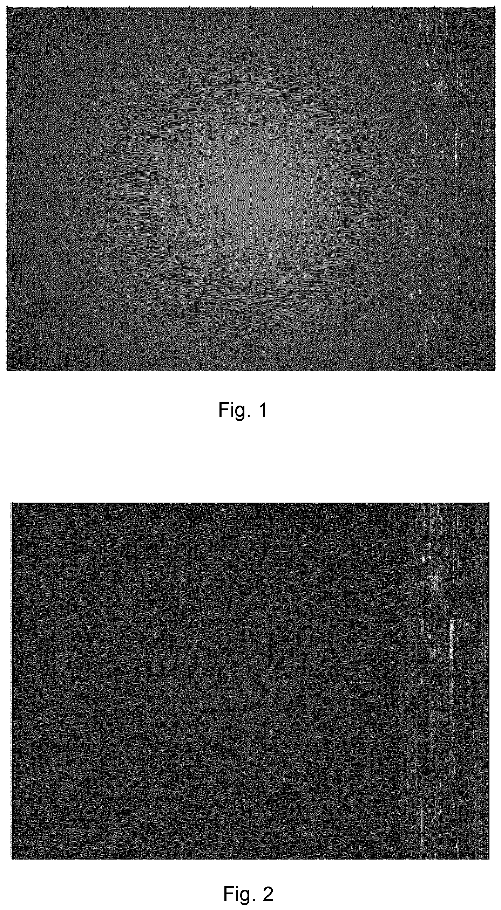

In der Darstellung des Mikroskopbildes in Fig. 1 ist deutlich ein Reflex der Hellfeld-Beleuchtung zu erkennen, der gemäß Fig. 2 bei der Anwendung der Live-Reflex-Korrektur nicht mehr zu sehen ist.

**Patentansprüche**

1. Verfahren zur Korrektur von durch koaxiales Auflicht verursachten Auflicht-Reflexen in einem modularen Digitalmikroskop mit einer koaxialen Hellfeld-Beleuchtungseinrichtung, einem motorisierten Zoomsystem, einem wechselbaren Objektiv, einer digitalen Bilderfassungseinheit und einer Bildverarbeitungseinheit, folgende Schritte umfassend:

- Laden eines Kalibrationsdatensatzes, der für verschiedene Zoompositionen $\beta\_i$, die jedenfalls einen minimalen und einen maximalen Zoomwert des Zoomsystems umfassen, Kalibrationsbilder des Auflicht-Reflexes und Kalibrationsmetadaten zu jedem Kalibrationsbild umfasst;
- Erfassen eines Bildes mit zugehörigen Bild-Metadaten, die mindestens eine Zoomposition $\beta\_a$ des Zoomsystems umfassen;
- Ermitteln eines Korrekturfaktors unter Verwendung der Kalibrationsmetadaten des Kalibrationsdatensatzes und der Bild-Metadaten;
- Ermitteln eines Reflexbildes für die Zoomposition $\beta\_a$ aus dem Kalibrationsdatensatz;
- Verrechnen des Reflexbildes mit dem Korrekturfaktor zu einem korrigierten Reflexbild;
- Verrechnen des erfassten Bildes mit dem korrigierten Reflexbild.

2. Verfahren nach Anspruch 1, **dadurch gekennzeichnet**, das die Bild-Metadaten weiterhin eine Beleuchtungsstärke ($L\_BF$) der Hellfeld-Beleuchtungseinrichtung und eine Integrationszeit ($E\_N$) der Bilderfassungseinheit umfassen.

3. Verfahren nach Anspruch 1 oder 2, **dadurch gekennzeichnet, dass** das Reflexbild aus mindestens zwei Kalibrationsbildern durch Interpolation berechnet wird, welche zur aktuellen Zoomposition $\beta\_a$ benachbarte Zoompositionen $\beta\_i$ als Metadatum aufweisen.

4. Verfahren nach einem der Ansprüche 1 bis 3, **dadurch gekennzeichnet, dass** das Reflexbild mit dem Korrekturfaktor multipliziert wird.

5. Verfahren nach einem Ansprüche 2 bis 4, **dadurch gekennzeichnet, dass** der Korrekturfaktor nach folgender Formel berechnet wird:

$$\frac{E\_N * L\_BF}{E\_R * L\_CBF} * K$$

wobei K ein Sicherheitsfaktor, $E\_R$ eine modellierte Integrationszeit und L_CBF ein Stromwert der Beleuchtungsstärke der Kalibrationseinstellung des Mikroskops ist.

6. Verfahren nach Anspruch 5, **dadurch gekennzeichnet, dass** die modellierte Integrationszeit ($E\_R$) durch eine Formel berechnet wird, die mittels Approximation aus den Bild-Metadaten und Kalibrationsmetadaten ermittelt wird.

7. Verfahren nach Anspruch 1, **dadurch gekennzeichnet, dass** der Kalibrationsdatensatz durch folgende Schritte erstellt wird:

a) Einstellen eines vorbestimmten Wertes der Auflicht-Beleuchtungseinrichtung $L\_CBF$;
b) Einstellen einer maximalen Defokussierung;
c) Einstellen einer bestimmten Zoomposition $\beta\_R$;
d) Erfassen eines Bildes als Kalibrationsbild;
e) Abspeichern des Kalibrationsbildes mit der zugehörigen Zoomposition $\beta\_R$ und Integrationszeit $E\_R$ im Kalibrationsdatensatz.
f) Wiederholen der Schritte b) bis e) für verschiedene Zoompositionen $\beta\_i$ einschließlich minimaler und maximaler Zoomposition.

8. Verfahren nach Anspruch 7, weiterhin folgende Schritte umfassend:

a) Berechnen von modellierten Integrationszeiten durch Approximieren der verwendeten Integrationszeiten zu den Zoompositionen durch ein Modell, vorzugsweise ein Polynom vierten Grades;
b) Ermitteln von Quotienten aus modellierten und verwendeten Integrationszeiten;
c) Multiplizieren der Kalibrationsbilder mit den ermittelten Quotienten.

9. Digitalmikroskop, umfassend ein wechselbares Objektiv, ein motorisiertes Zoomsystem, eine koaxiale Auflicht-Beleuchtungsvorrichtung, eine digitale Bilderfassungseinheit, eine Bildverarbeitungseinheit und eine Steuereinheit, **dadurch gekennzeichnet, dass** in der Bildverarbeitungseinheit ein Verfahren nach einem der Ansprüche 1 bis 8 implementiert ist.

10. Datenverarbeitungsprogramm mit Programmcodemitteln zur Durchführung eines Verfahrens nach einem der Ansprüche 1 bis 8.

11. Verfahren nach Anspruch 7 oder 8, **dadurch gekennzeichnet, dass** jedes Kalibrationsbild in jedem seiner Farbkanäle tiefpassgefiltert und skaliert wird und die skalierten Kalibrationsbilder, eine Kalibrationsbeleuchtungsstärke L_CBF und fünf Koeffizienten für den Fit der Integrationszeit E_R über die verschiedenen Zoompositionen durch ein Polynom vierter Ordnung als Kalibrationsdatensatz gespeichert werden.

12. Digitalmikroskop nach Anspruch 9, **dadurch gekennzeichnet, dass** die Steuereinheit eingerichtet ist, ein Kalibrationsverfahren nach einem der Ansprüche 7, 8 oder 11 auszuführen.

## Claims

1. Method for correcting incident-light reflections caused by coaxial incident light in a modular digital microscope having a coaxial bright-field illumination device, a motorized zoom system, an interchangeable objective, a digital image capturing unit and an image processing unit, comprising the following steps:

   - loading a calibration dataset comprising calibration images of the incident-light reflection and calibration metadata with respect to each calibration image for different zoom positions $\beta\_i$, which at any rate comprise a minimum and a maximum zoom value of the zoom system;
   - capturing an image with associated image metadata, which comprise at least one zoom position $\beta\_a$ of the zoom system;
   - ascertaining a correction factor using the calibration metadata of the calibration dataset and the image metadata;
   - ascertaining a parasitic image for the zoom position $\beta\_a$ from the calibration dataset;
   - calculating the parasitic image using the correction factor to form a corrected parasitic image;
   - calculating the captured image using the corrected parasitic image.

2. Method according to Claim 1, **characterized in that** the image metadata furthermore comprise an illuminance ($L\_BF$) of the bright-field illumination device and an integration time (E N) of the image capturing unit.

3. Method according to Claim 1 or 2, **characterized in that** the parasitic image is calculated by interpolation from at least two calibration images that have zoom positions $\beta\_i$, which are adjacent to the current zoom position $\beta\_a$, as metadata.

4. Method according to one of Claims 1 to 3, **characterized in that** the parasitic image is multiplied by the correction factor.

5. Method according to one of Claims 2 to 4, **characterized in that** the correction factor is calculated according to the following formula:

$$\frac{E_N * L\_BF}{E_R * L\_CBF} * K,$$

   wherein K is a safety factor, $E\_R$ is a modelled integration time and $L\_CBF$ is a current value of the illuminance of the calibration setting of the microscope.

6. Method according to Claim 5, **characterized in that** the modelled integration time ($E\_R$) is calculated by a formula that is ascertained by approximation from the image metadata and calibration metadata.

7. Method according to Claim 1, **characterized in that** the calibration dataset is established by the following steps:

   a) setting a predetermined value of the incident-light illumination device $L\_CBF$;
   b) setting a maximum defocusing;
   c) setting a determined zoom position $\beta\_R$;
   d) capturing an image as a calibration image;
   e) storing the calibration image with the associated zoom position $\beta\_R$ and integration time $E\_R$ in the calibration dataset;
   f) repeating steps b) to e) for different zoom positions $\beta\_i$ including minimum and maximum zoom positions.

8. Method according to Claim 7, furthermore comprising the following steps:

   a) calculating modelled integration times by approximating the used integration times to the zoom positions by way of a model, preferably a fourth-degree polynomial;
   b) ascertaining quotients of modelled and used integration times;
   c) multiplying the calibration images by the ascertained quotients.

9. Digital microscope, comprising an interchangeable objective, a motorized zoom system, a coaxial incident-light illumination apparatus, a digital image capturing unit, an image processing unit and a control unit, **characterized in that** a method according to one of Claims 1 to 8 is implemented in the image processing unit.

10. Data-processing program with program code means for carrying out a method according to one of Claims 1 to 8.

11. Method according to Claim 7 or 8, **characterized in that** each calibration image is low-pass filtered and scaled in each of its colour channels and the scaled calibration images, a calibration illuminance $L\_CBF$ and five coefficients for the fit of the integration time $E\_R$ over the different zoom positions by way of a fourth-order polynomial are stored as a calibration dataset.

12. Digital microscope according to Claim 9, **characterized in that** the control unit is configured to carry out a calibration method according to one of Claims 7, 8 or 11.

**Revendications**

1. Procédé de correction des réflexions de lumière provoquées par une lumière incidente coaxiale dans un microscope numérique modulaire comportant un dispositif d'éclairage en champ clair coaxial, un système de zoom motorisé, un objectif interchangeable, une unité d'acquisition d'images numérique et une unité de traitement d'images, comprenant les étapes suivantes consistant à :

   - charger un ensemble de données d'étalonnage comprenant, pour différentes positions de zoom $\beta\_i$, qui comprennent au moins une valeur de zoom minimale et maximale du système de zoom, des images d'étalonnage de la réflexion de lumière incidente et des métadonnées d'étalonnage pour chaque image d'étalonnage ;
   - acquérir une image comportant des métadonnées d'images associées, qui comprennent au moins une position de zoom $\beta\_a$ du système de zoom ;
   - déterminer un facteur de correction en utilisant les métadonnées d'étalonnage de l'ensemble de données d'étalonnage et les métadonnées d'images ;
   - déterminer une image de réflexion pour la position de zoom $\beta\_a$ à partir de l'ensemble de données d'étalonnage ;
   - calculer l'image de réflexion à l'aide du facteur de correction pour obtenir une image de réflexion corrigée ;
   - calculer l'image acquise à l'aide de l'image de réflexion corrigée.

2. Procédé selon la revendication 1, **caractérisé en ce que** les métadonnées d'images comprennent en outre une intensité d'éclairage ($L\_BF$) du dispositif d'éclairage en champ clair et un temps d'intégration ($E\_N$) de l'unité d'acquisition d'images.

3. Procédé selon la revendication 1 ou 2, **caractérisé en ce que** l'image de réflexion est calculée par interpolation à partir d'au moins deux images d'étalonnage qui présentent en tant que métadonnées des positions de zoom $\beta\_i$ adjacentes à la position de zoom actuelle $\beta\_a$.

4. Procédé selon l'une quelconque des revendications 1 à 3, **caractérisé en ce que** l'image de réflexion est multipliée par le facteur de correction.

5. Procédé selon l'une quelconque des revendications 2 à 4, **caractérisé en ce que** le facteur de correction est calculé selon la formule suivante :

$$\frac{E\_N * L\_BF}{E\_R * L\_CBF} * K$$

où K est un facteur de sécurité, $E\_R$ est un temps d'intégration modélisé et $L\_CBF$ est une valeur de courant de l'intensité d'éclairage du réglage d'étalonnage du microscope.

6. Procédé selon la revendication 5, **caractérisé en ce que** le temps d'intégration modélisé ($E\_R$) est calculé par une formule qui est déterminée par approximation à partir des métadonnées d'images et des métadonnées d'étalonnage.

7. Procédé selon la revendication 1, **caractérisé en ce que** l'ensemble de données d'étalonnage est créé par les étapes suivantes consistant à :

   a) régler une valeur prédéterminée du dispositif d'éclairage en lumière incidente $L\_CBF$ ;
   b) régler une défocalisation maximale ;
   c) régler une position de zoom prédéterminée $\beta\_R$ ;
   d) acquérir une image en tant qu'image d'étalonnage ;
   e) stocker l'image d'étalonnage avec la position de zoom $\beta\_R$ et le temps d'intégration $E\_R$ associés dans l'ensemble de données d'étalonnage ;
   f) répéter les étapes b) à e) pour différentes positions de zoom $\beta\_i$, y compris les positions de zoom minimale et maximale.

8. Procédé selon la revendication 7, comprenant en outre les étapes suivantes consistant à :

   a) calculer des temps d'intégration modélisés par approximation des temps d'intégration utilisés aux positions de zoom par un modèle, de préférence un polynôme du quatrième degré ;
   b) déterminer des quotients entre les temps d'intégration modélisés et ceux utilisés ;
   c) multiplier les images d'étalonnage par les quotients déterminés.

9. Microscope numérique, comprenant un objectif interchangeable, un système de zoom motorisé, un dispositif d'éclairage en lumière incidente coaxial, une unité d'acquisition d'images numérique, une unité de traitement d'images et une unité de commande, **caractérisé en ce qu'**un procédé selon l'une quelconque des revendications 1 à 8 est mis en œuvre dans l'unité de traitement d'images.

10. Programme de traitement de données comprenant des moyens à code de programme destinés à mettre en œuvre un procédé selon l'une quelconque des revendications 1 à 8.

11. Procédé selon la revendication 7 ou 8, **caractérisé en ce que** chaque image d'étalonnage est filtrée par un filtre passe-bas et mise à l'échelle dans chacun de ses canaux de couleur et **en ce que** les images d'étalonnage mises à l'échelle, une intensité d'éclairage d'étalonnage L_CBF et cinq coefficients destinés à l'ajustement du temps d'intégration $E\_R$ sur les différentes positions de zoom par un polynôme d'ordre quatre sont stockés en tant qu'ensemble de données d'étalonnage.

12. Microscope numérique selon la revendication 9, **caractérisé en ce que** l'unité de commande est conçue pour mettre en œuvre un procédé d'étalonnage selon l'une quelconque des revendications 7, 8 ou 11.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20020041383 A1
- DE 10114757 B4

- US 20110142365 A1